# EUROPEAN PATENT APPLICATION

(11) **EP 1 657 916 A1**
(43) Date of publication of application: **17.05.2006**
(21) Application number: 04771752.5
(22) Date of filing: 11.08.2004
(51) Int. Cl.: H04N 5/44

(54) **TELEVISION RECEIVER AND EXTERNAL DEVICES**

(30) Priority: 11.08.2003 JP 2003291597
(71) Applicant: MATSUSHITA ELECTRIC INDUSTRIAL CO., LTD., Kadoma-shi, Osaka 571-8501 (JP)
(72) Inventor: SUZUKI, Hidekazu c/o Matsu. Elec. Ind. Co., Ltd., Osaka-shi, Osaka 540-6319 (JP); OYAMA, Tetsuo c/o Matsu. Elec. Ind. Co., Ltd., Osaka-shi, Osaka 540-6319 (JP); YAMADA, Masazumi c/o Matsu.Elec.Ind.Co., Ltd., Osaka-shi, Osaka 540-6319 (JP)
(74) Representative: Eisenführ, Günther
(86) International application number: PCT/JP2004/011791
(87) International publication number: WO 2005/015901

(57) **Abstract**

A television receiver according to the present invention successively transmits the same transmission command to external devices (1a) ~ (3b) connected through IEEE (1394) lines and HDMI lines, and monitors the DC levels of HDMI terminals to which the respective HDMI lines are connected, thereby to discriminate the HDMI lines used for transmission of response commands that are outputted from the respective BD recorders (1b)~(3b) in response to the transmission commands, and then automatically performs switching between the IEEE (1394) lines and the HDMI lines which are used by the respective BD recorders (1b)~(3b), according to the operations of the BD recorders (16)~(3b) . Therefore, with respect to the plural external devices which are connected to the television receiver through the HDMI lines and the IEEE (1394) lines, it is possible to automatically recognize as to which external devices are connected to which HDMI lines, whereby bothersome settings as those required in the conventional device are dispensed with, leading to enhanced user operability.

## Description

### TECHNICAL FIELD

The present invention relates to a television receiver, and external devices which are connected to the television receiver through IEEE1394 lines.

### BACKGROUND ART

In recent years, with a spread of digital broadcasting, digitization of AV equipment such as televisions and VTRs have been progressed, and those equipment utilizing AV network standard such as IEEE1394 have increased. The IEEE1394 is a digital interface that can mutually connect digital AV devices, and the IEEE1394 enables the AV devices to constitute a network and exchange AV streams with each other.

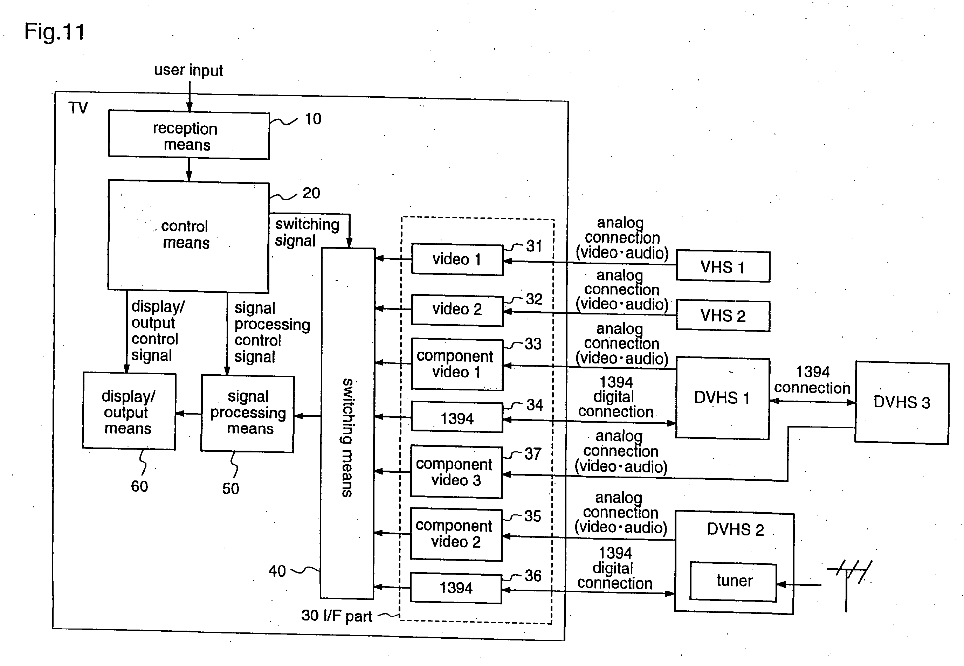

A schematic construction of a television receiver (TV) including such IEEE1394 is shown in figure 11.

The TV shown in figure 11 comprises a receiving means 10 for receiving information inputted by a user, a control means for controlling function blocks according to the input information, an I/F part 30 for performing data exchange with an external device, a switching means 40 for changing a data output path from the I/F part 30 to a signal processing means 50, a signal processing means 50 for subjecting the data received from the external device to predetermined processing, and a display/output means 60 for displaying and outputting the data subjected to the predetermined processing.

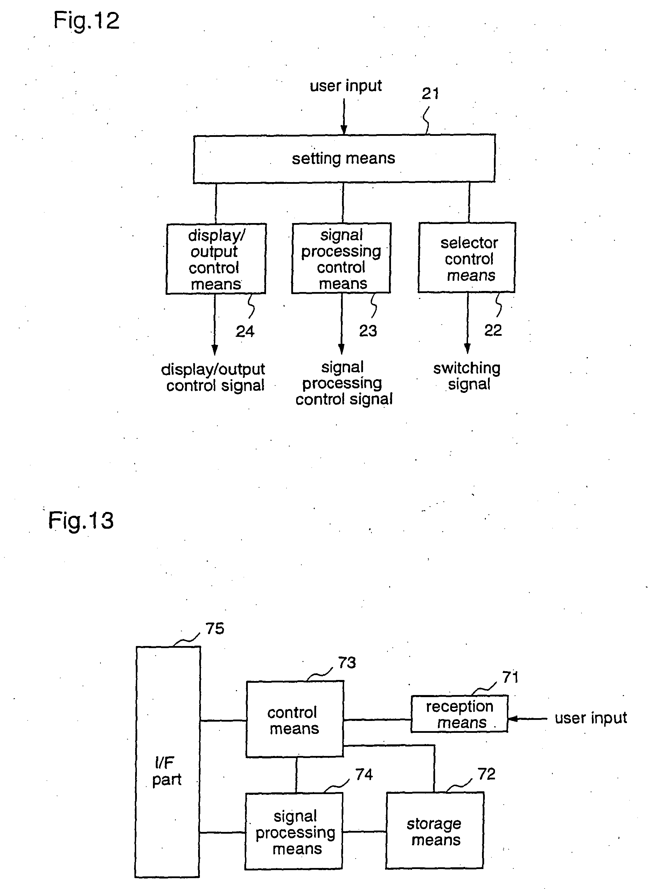

The control means 20 includes, as shown in figure 12, a setting means 21 for performing various kinds of setting instructions according to the user input information, and holding setting information, a selector control means 22 for outputting a switching signal according to an instruction of the setting means 21, a signal processing control means 23 for outputting a signal processing control signal according to an instruction of the setting means 21, and a display/output control means 24 for outputting a display/output control signal according an instruction of the setting means 21.

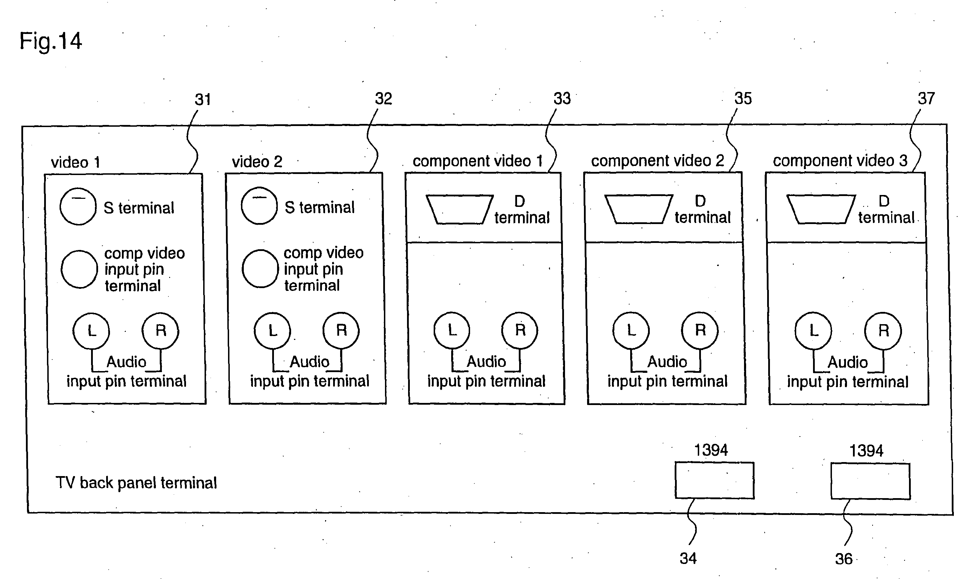

The I/F part 30 includes, as shown in figure 14, analog input terminals 31, 32, 33, 35, and 37 which are connectable with up to five external devices, and IEEE1394 terminals 34 and 36 which are digitally connectable with up to two external devices. The analog input terminals 31, 32, 33, 35, and 37 are displayed on an OSD display screen as items "video 1", "video 2", "component video 1" , "component video 2", "component video 3".

A schematic construction of an external device connected to the TV is shown in figure 13.

The external device shown in figure 13 comprises a receiving means 71 for receiving instructions from a user, an I/F part 75 for exchanging data with the TV or other external devices, a storage means 72 for holding the data received through the I/F part 75, a signal processing means 74 for subjecting the data received through the I/F part 75 or the data stored in the storage means 72 to predetermined processing, and a control means 73 for controlling the respective function blocks according to the instructions from the user. The external device is, for example, a recording and playback device such as a VTR or a DVHS.

Next, a description will be given of the operation of performing data playback with the TV being connected to the external device.

When the user instructs data reproduction to a desired external device using such as a remote controller for the external device only, the external device side reads the data stored in the storage means 72, subjects the data to a predetermined processing by the signal processing means 74, and transmits the data as playback data to the TV side through the I/F part 75.

On the TV side, when the playback data transmitted from the external device is received through the I/F part 30, the data is subjected to a predetermined processing by the signal processing means 50, and thereafter, displayed or outputted by the display/output means 60.

In this way, the user can play and view the data stored in the desired external device.

By the way, when the conventional TV plays the playback data stored in the DVHS, the TV receives the playback data through the IEEE1394 line. Although the IEEE1394 line can perform packet transmission of video and audio compressed streams, it is difficult to transmit OSD (On Screen Display) data, such as a DVHS operation menu, as a compressed stream through the IEEE13984. Therefore, when transmitting such OSD menu from the DVHS side to the TV, it is necessary for the TV side to change the transmission line from the IEEE1394 line to the analog line by the switching means 40.

Although the TV side can automatically recognize an external device connected to the TV through the IEEE1394 line when the external device is connected by the IEEE1394 line, it cannot automatically recognize an external device connected through the analog video signal input terminal. Therefore, in order to perform switching between the IEEE1394 line and the analog line which are used by the external device, according to the operation of the external device, it is necessary to recognize as to which analog video signal input terminal is connected to which external device through the analog line. That is, the user must previously perform analog connection setting for making the TV side recognize the external device connected through the analog line, by operating the remote controller or the like.

Hereinafter, the conventional analog connection setting will be described.

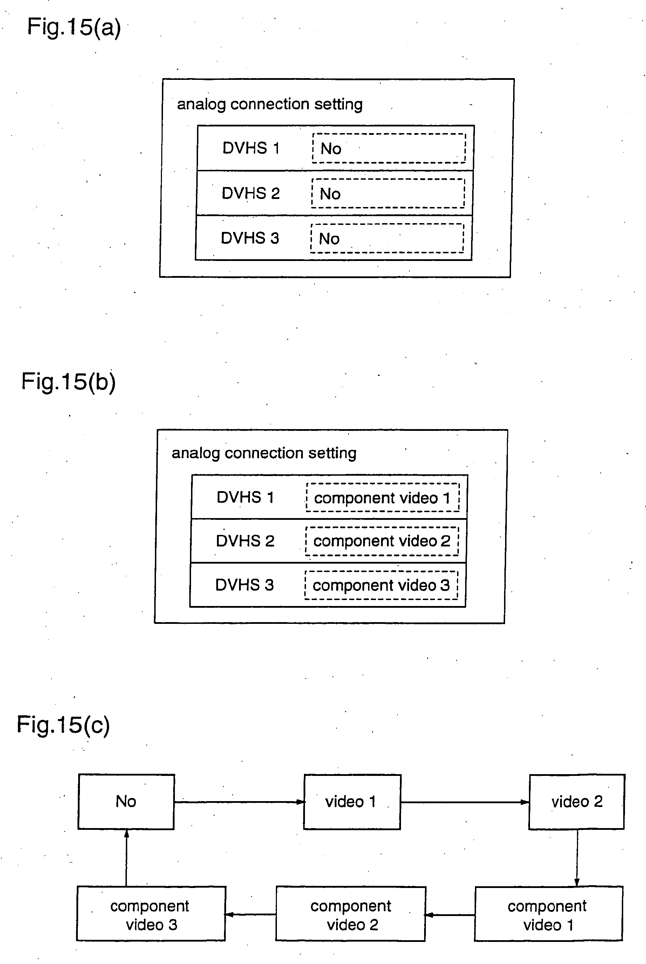

Initially, in order to perform analog connection setting, the user performs OSD display of an analog connection setting initial screen as shown in figure 15(a). At this time, on the TV side, all of external devices connected through the IEEE1394 lines including daisy-chained external devices are automatically recognized for OSD display. Since analog connection setting is not yet done at the present stage, an item "NO" indicating the state where analog connection setting is not done is displayed for items "DVHS1", "DVHS2" and "DVHS3", respectively.

Next, the user successively selects the items indicating the states of analog connection setting by operating a remote controller or the like as shown in figure 15(c), thereby performing analog connection setting. That is, since the DVHS1 is connected to the analog input terminal 33 by the analog line, "component video 1" is selected with respect to the item "DVHS1". Since the DVHS2 is connected to the analog input terminal 35 by the analog line, "component video 2" is selected with respect to the item "DVHS2". Since the DVHS3 is connected to the analog input terminal 37 by the analog line, "component video 3" is selected for the item "DVHS3". When the selecting operation is ended, the OSD display screen shown in figure 15(b) is displayed, and the user finishes the analog connection setting.

In this way, since the user has previously performed analog connection setting manually using a remote controller or the like, when the playback video of•the DVHS changes from digital to analog, the switching means 40 automatically performs switching from the IEEE1394 line to the analog line, whereby the user can continuously view the video.

In the conventional construction, however, when the user performs analog connection setting on the OSD screen, it is a very bothersome operation for the user to successively switch and select the items using operation buttons on a remote controller or the like, as shown in figure 15(c). Further, since the user himself must perform such setting while checking the connection, status of cables on a back panel as shown in figure 14, the user is apt to be confused, leading to possibility of mistake.

A solution to the above-mentioned problems is disclosed in Japanese Published Patent Application No. 2002-185874. This literature discloses a technique for automatic analog connection setting in which transmission commands for controlling power on/off of external devices from a TV through IEEE1394 terminals, and sync signals of analog video signals that are returned from the external devices are detected at analog input terminals to recognize as to which analog input terminals are connected to which external devices.

In order to perform the above-mentioned analog connection setting, however, a sync signal detection circuit is required on the TV side, which leads to an increase in circuit scale and cost.

Further, the above-mentioned analog connection setting takes a certain amount of time from setting start to end. That is, the external device turns on power of a microcomputer system on receipt of an instruction of power-on from the TV side through the IEEE1394 line, and instructs power-on of the respective circuit blocks, whereby power of a signal processing system is turned on. Thereafter, the external device outputs sync signals to the TV side. Therefore, it takes time from the reception of the power-on instruction to the outputting of the sync signals. As a result, the time for the analog connection setting is undesirably increased, and the user should wait in the meantime.

Further, in the above-mentioned analog connection setting, since discrimination of analog connection terminals is carried out by detecting the sync signals, when plural external devices are connected, it is impossible to simultaneously perform analog connection settings for all the plural external devices. Moreover, as for external devices that are daisy-chained by the IEEE1394 line, the user should perform manual setting as in the

### prior art.

Furthermore, in the technique described in the above-mentioned literature, when the external devices are connected by digital lines such as HDMI (High Definition Multimedia Interface) lines and IEEE1394 lines, since there is no sync signal in digital data outputted from the external devices, a special circuit for detecting a pattern of sync signals is required, whereby the whole circuit scale is increased, leading to cost increase. Further, digital lines such as HDMI lines cannot be automatically recognized in contrast to the IEEE1394 lines, it is necessary to perform digital setting for making the TV side recognize as to which digital lines are connected to which external devices, resulting in an increase in setting time.

The present invention is made to solve the above-described problems and has for its object to provide a television receiver and an external device, which can automatically perform analog/digital connection setting in a short time by a simple circuit structure, thereby to significantly enhance user operability.

### DISCLOSURE OF THE INVENTION

According to Claim 1 of the present invention, a television receiver to which plural external devices are respectively connected through IEEE1394 lines and analog lines, comprises a command transmission means for successively transmitting the same transmission command to the plural external devices through the IEEE1394 lines connected to the respective external devices; and a switching control means for monitoring DC levels at analog video signal input terminals or analog audio signal input terminals which are connected to the respective analog lines to discriminate analog lines which are used for transmission of response commands that are outputted from the respective external devices in response to the respective transmission commands, and automatically selecting either the IEEE1394 lines or the analog lines which are used by the respective external devices, according to the operations of the respective external devices.

Therefore, a sync signal detection circuit which has conventionally been required is dispensed with, whereby the circuit structure is simplified. Further, analog connection setting can be automatically carried out in a short time even when the external devices are daisy-chained, whereby user operability is enhanced.

According to Claim 2 of the present invention, a television receiver to which plural external devices are respectively connected through IEEE1394 lines and analog lines, comprises a command transmission means for transmitting plural transmission commands having different characteristics for the respective external devices, to the respective external devices through the IEEE1394 lines connected to the external devices; and a switching control means for discriminating an analog line which is used for transmission of response commands.that are outputted from the respective external devices in response to the respective transmission commands, and automatically selecting either the IEEE1394 lines or the analog lines which are used by the respective external devices, according to the operations of the respective external devices.

Therefore, analog connection settings of all the external devices including daisy-chained external devices can be carried out simultaneously in a short time, whereby user operability is enhanced.

According to Claim 3 of the present invention, in the television receiver defined in Claim 1, the transmission command is power-on or power-off to the external devices, or repetition thereof.

Therefore, a sync signal detection circuit which has conventionally been required is dispensed with, whereby the circuit structure is simplified.

According to Claim 4 of the present invention, in the television receiver defined in Claim 2, the transmission command is power-on or power-off to the external devices, or repetition thereof; and the command transmission means transmits transmission commands having different on-times for the respective external devices or different numbers of on/off controls for the respective external devices.

Therefore, a sync signal detection circuit which has conventionally been required is dispensed with, whereby the circuit structure is simplified.

According to Claim 5 of the present invention, in the television receiver defined in Claim 2, the terminals to which the respective analog lines are connected are analog video signal input terminals or analog audio signal input terminals.

Therefore, it is possible to realize a television receiver which can automatically perform analog connection setting in a short time by a simple circuit structure, thereby significantly enhancing user operability.

According to Claim 6 of the present invention, in the television receiver defined in Claim 5, the switching control means monitors the DC levels at the analog video signal input terminals or the analog audio signal input terminals to discriminate the analog lines.

Therefore, a sync signal detection circuit which has conventionally been required is dispensed with, whereby the circuit structure is simplified.

According to Claim 7 of the present invention, a television receiver to which external devices are respectively connected through IEEE1394 lines and digital lines, comprises a command transmission means for transmitting transmission commands to the external devices through the IEEE1394 lines; and a switching control means for discriminating a digital line which is used for transmission of response commands that are outputted from the external devices in response to the transmission commands, and selecting either the IEEE1394 lines or the digital lines which are used by the external devices, according to the operations of the external devices.

Therefore, a sync signal detection circuit which has conventionally been required is dispensed with, whereby the circuit structure is simplified. Further, digital connection settings of the external devices which are connected by the IEEE1394 lines and the digital lines can be automatically carried out in a short time, whereby user operability is enhanced.

According to Claim 8 of the present invention, a television receiver to which plural external devices are respectively connected through IEEE1394 lines and digital lines, comprises a command transmission means for successively transmitting the same transmission command to the plural external devices through the IEEE1394 lines connected to the respective external devices; and a switching control means for discriminating a digital line which is used for transmission of response commands that are outputted from the respective external devices in response to the respective transmission commands, and selecting either the IEEE1394 lines or the digital lines which are used by the respective external devices, according to the operations of the respective external devices.

According to Claim 9 of the present invention, a television receiver to which plural external devices are respectively connected through IEEE1394 lines and digital lines, comprises a command transmission means for transmitting plural transmission commands having different characteristics for the respective external devices, to the respective external devices through the IEEE1394 lines connected to the external devices; and a switching control means for discriminating a digital line which is used for transmission of response commands that are outputted from the respective external devices in response to the respective transmission commands, and selecting either the IEEE1394 lines or the digital lines which are used by the respective external devices, according to the operations of the respective external devices.

Therefore, digital connection setting of all the external devices including daisy-chained external devices can be simultaneously carried out in a short time, whereby user operability is enhanced.

According to Claim 10 of the present invention, in the television receiver defined in Claim 8, the transmission command is power-on or power-off to the external devices, or repetition thereof.

Therefore, a sync signal detection circuit which has conventionally been required is dispensed with, whereby the circuit structure is simplified.

According to Claim 11 of the present invention, in the television receiver defined in Claim 9, the transmission command is power-on or power-off to the external devices, or repetition thereof; and the command transmission means transmits transmission commands having different on-times for the respective external devices or different numbers of on/off controls for the respective external devices.

Therefore, a sync signal detection circuit which has conventionally been required is dispensed with, whereby the circuit structure is simplified.

According to Claim 12 of the present invention, in the television receiver defined in Claim 8 or Claim 9, the terminals to which the respective digital lines are connected are HDMI terminals.

Therefore, it is possible to realize a television receiver which can automatically perform digital connection setting in a short time by a simple circuit structure, thereby significantly enhancing user operability.

According to Claim 13 of the present invention, in the television receiver defined in Claim 12, the switching control means monitors the DC levels of the HDMI terminals to discriminate the digital lines.

Therefore, a sync signal detection circuit which has conventionally been required is dispensed with, whereby the circuit structure is simplified.

According to Claim 14 of the present invention, in the television receiver defined in Claim 12, the command transmission means transmits the transmission commands through the IEEE1394 lines to the external devices; and the switching control means monitors signal levels of device control signals which are outputted from the external devices in response to the transmission commands or response commands of the device control signals, to discriminate the digital lines.

Therefore, a sync signal detection circuit which has, conventionally been required is dispensed with, whereby the circuit structure is simplified.

According to Claim 15 of the present invention, an external device connected to a television receiver through IEEE1394 lines and analog lines, includes a detection means for detecting transmission commands which are transmitted from the television receiver through the IEEE1394 lines, and outputting response commands corresponding to the transmission commands to the television receiver through the analog lines.

Therefore, it is possible to provide a playback system which can automatically perform analog connection setting by a simple circuit structure.

According to Claim 16 of the present invention, an external device connected to a television receiver through IEEE1394 lines and digital lines, includes a detection means for detecting transmission commands which are transmitted from the television receiver through the IEEE1394 lines, and outputting response commands corresponding to the transmission commands to the television receiver through the digital lines.

Therefore, it is possible to provide a playback system which can automatically perform analog connection setting by a simple circuit structure.

### BRIEF DESCRIPTION OF THE DRAWINGS

Figure 1 is a diagram illustrating a television receiver according to a first embodiment of the present invention, and external devices connected to the television receiver.
Figure 2 is a diagram for explaining an analog connection automatic setting method using the television receiver according to the first embodiment.
Figure 3 is a diagram for explaining an analog connection automatic setting method using the television receiver according to the first embodiment.
Figure 4 is a diagram illustrating a television receiver according to a second embodiment of the present invention, and external devices connected to the television receiver.
Figure 5 is a diagram illustrating an example for explaining a digital connection automatic setting method using the television receiver according to the second embodiment.
Figure 6 is a diagram for explaining a digital connection automatic setting method using the television receiver according to the second embodiment.
Figure 7 is a block diagram illustrating the construction of a control means in the television receiver according to the present invention.
Figure 8 is a block diagram illustrating the schematic construction of an external device according to the present invention.
Figure 9 is a diagram illustrating specific examples of a television receiver and an external device according to the present invention.
Figure 10 is a diagram illustrating specific examples of a television receiver and an external device according to the present invention.
Figure 11 is a diagram illustrating a conventional television receiver and external devices connected to the television receiver.
Figure 12 is a block diagram illustrating the construction of a control means in the conventional television receiver
Figure 13 is a block diagram illustrating the schematic construction of the conventional external device.
Figure 14 is a diagram illustrating an example of a back panel terminal of the conventional television receiver.
Figure 15(a) is a diagram illustrating an analog connection setting initial screen which is displayed when analog connection setting is carried out in the conventional television receiver.
Figure 15(b) is a diagram illustrating an analog connection setting completion screen which is displayed when analog connection setting is completed in the conventional television receiver.
Figure 15(c) is a diagram illustrating setting items which are OSD displayed when performing analog connection setting in the conventional television receiver.

### BEST MODE TO EXECUTE THE INVENTION

Hereinafter, embodiments of the present invention will be described with reference to the drawings.

### (Embodiment 1)

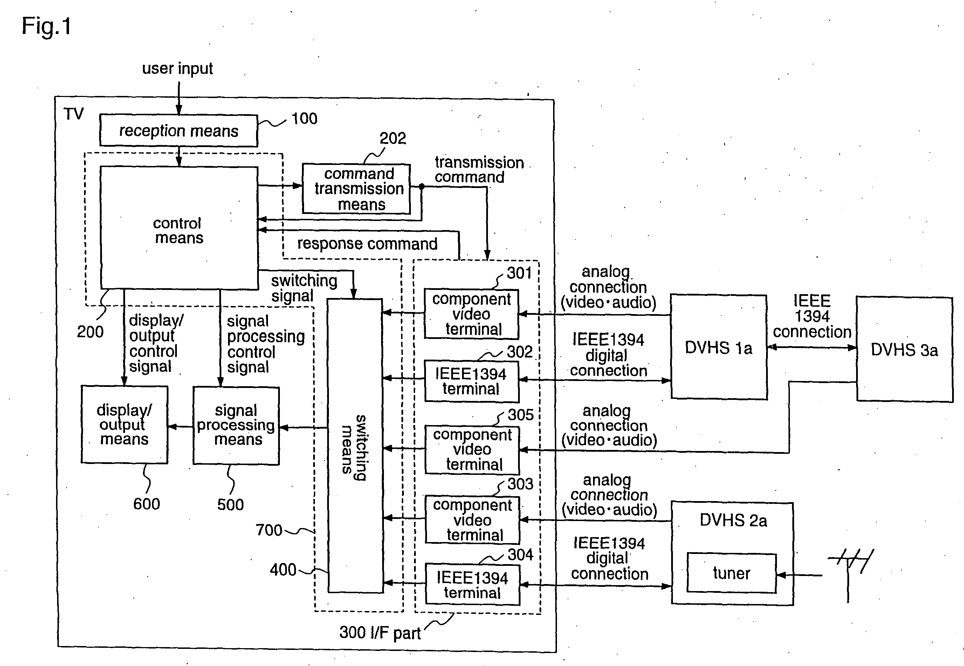

Figure 1 is a diagram illustrating a schematic construction of a television receiver according to a first embodiment of the present invention.

The television receiver (TV) comprises a reception means 100, an I/F part 300, a signal processing means 500, a display/output means 600, a command transmission means 202, and a switching control means 700.

The reception means 100 receives an instruction from a user.

The I/F part 300 exchanges data with an external device. This I/F part 300 has component video terminals 301, 303, and 305 as analog video signal input terminals, and IEEE1394 terminals 302 and 304. In this first embodiment, DVHS 1a, DVHS 2a, and DVHS 3a are analog-connected to the component video terminals 301, 303, and 305, respectively. Further, DVHS 1a and DVHS 2a are digital-connected to the IEEE1394 terminals 302 and 304, respectively. The DVHS 2a houses a tuner which enables the DVHS 2a to receive broadcast waves. The DVHS 3a is daisy-chained with the DVHS 1a through the IEEE1394 line, and the TV can communicate with both of the DVHS 1a and the DVHS 3a through the IEEE1394 terminal 302.

The signal processing means 500 performs predetermined processing on transmission data which is received from the external device through the I/F part 300.

The display/output means 600 displays or outputs the data which has been subjected to the predetermined processing by the signal processing means 500.

The command transmission means 202 transmits a transmission command to the external device.

The switching control means 700 monitors the DC levels at the plural analog input terminals of the I/F part 300 to discriminate an analog input terminal which is used for transmission of a response command that is outputted from the external device in response to the transmission command, and performs switching between the IEEE 1394 line and the analog line used by the external device, according to the operation of the external device. This switching control means 700 comprises a control means 200 for controlling the respective function blocks on the basis of the contents of instructions from the user which are received by the reception means 100, and a switching means 400 for changing the data output path from the I/F part 300 to the signal processing means 500.

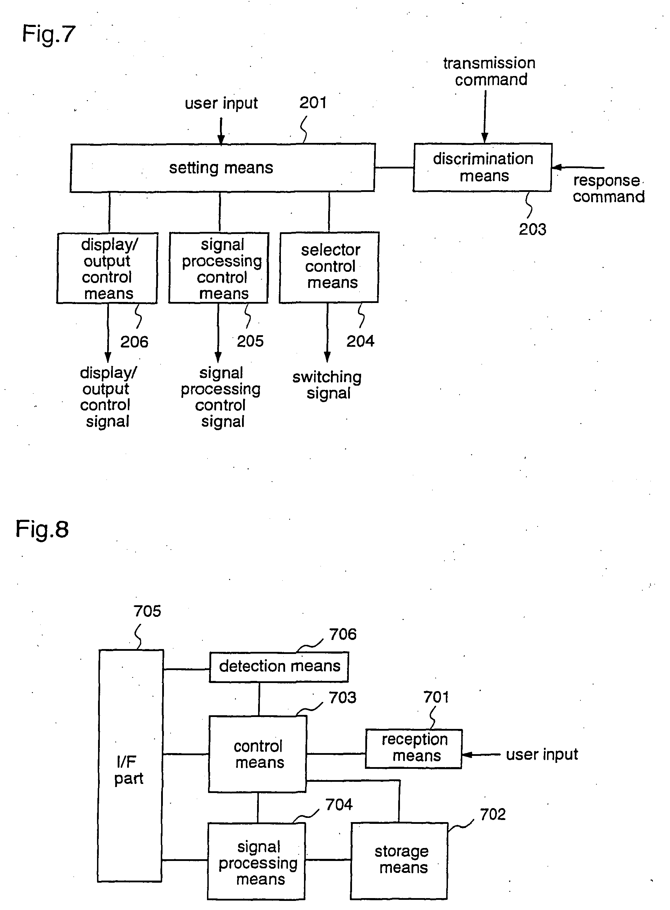

Figure 7 shows a detailed block diagram of the control means 200.

The control means 200 comprises a setting means 201 for performing setting according to instructions from the user and holding setting information, a discrimination means 203 for discriminating an analog line used for transmission of a response command that is outputted from the external device in response to a transmission command, a selector control means 204 for outputting a switching signal which selects either the IEEE1394 line or the analog line used by the external device, according to the operation of the external device, a signal processing control means 205 for outputting a signal processing control signal according to the setting information, and a display/output control means 206 for outputting a display/output control signal according to the setting information. Further, when the setting means 201 receives an instruction of analog connection setting from the user, the setting means 201 instructs the command transmission means 202 to output a transmission command.

Figure 8 is a schematic construction of an external device that is connected to the TV of the present invention.

The external device shown in figure 8 comprises a reception means 701 for receiving an instruction from the user, an I/F part 705 for exchanging data with the TV or another external device, a detection means 706 for detecting a transmission command that is transmitted from the TV side through the IEEE1394 line, a storage means 702 for holding the data received through the I/F part 705, a signal processing means 704 for performing predetermined processing on the data received through the I/F part 705 or the data stored in the storage means 702, and a control means 703 for controlling the respective function blocks according to instructions of the user. The external device may be a digital AV equipment such as a DVHS, a DVD recorder, or a blue-ray disc recorder (BD recorder).

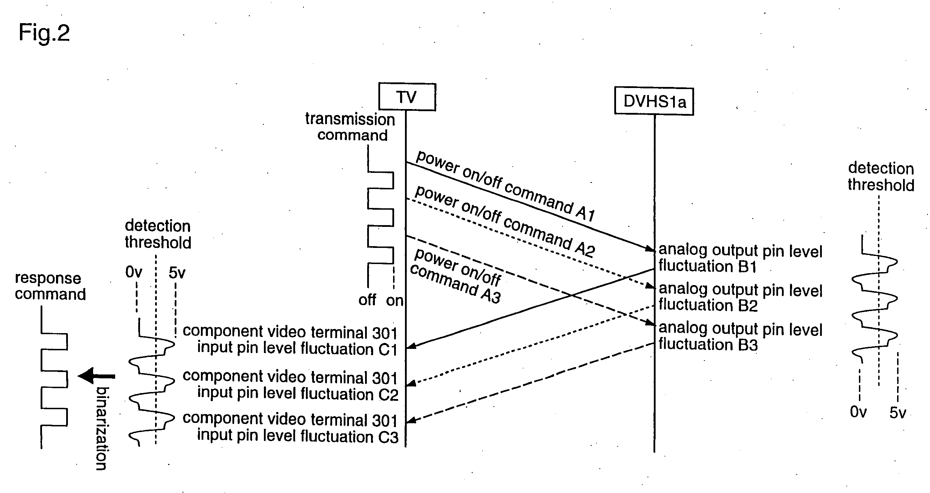

Next, the analog connection setting according to the first embodiment will be described with reference to figure 2.

On the TV side, initially, the command transmission means 202 of the control means 200 transmits; as transmission commands, power on/off commands A1~A3 through the IEEE1394 terminal 302 to the DVHS 1a.

On the DVHS 1a side, DC level fluctuations B1~B3 occur in outputs of analog pins that are power-on/off-controlled by the power on/off commands A1~A3, and the DC level fluctuations B1~83 are transmitted as response commands to the TV side through the analog line.

On the TV side, DC level fluctuations C1~C3 occur at the component video terminal 301, on receipt of the response commands from the DVHS 1a. The DC level fluctuations C1~C3 are detected and binarized by the discrimination means 203, and the numbers of on/off controls as well as the on-times of the DC level fluctuations are compared with the transmission command (hereinafter, "on" means the state where the DC level is high while "off" means the state where the DC level is low). As the result of comparison, when it is determined that the transmission commands A1~A3 coincide with the signals obtained by binarizing the DC level fluctuations C1~C3, it is recognized that the component video terminal 301 used for transmission of the response commands B1~B3 is analog-connected to the DVHS 1a

Next, the transmission commands A1~A3 which are identical to those transmitted to the DVHS 1a are transmitted from the TV side through the IEEE1394 terminal 304 to the DVHS 2a, and the DC levels of the component video terminals 301, 303, and 305 to which the respective analog lines are connected are monitored, thereby to discriminate analog lines used for transmission of the response commands B1~B3 which are outputted from the DVHS 2a in response to the transmission commands A1~A3, and recognize that the component video terminal 303 is analog-conriected to the DVHS 2a.

Likewise, the transmission commands A1~A3 which are identical to those transmitted to the DVHS 1a are transmitted from the TV side through the IEEE1394 terminal 302 to the DVHS 3a, and the DC levels of the component video terminals 301, 303, and 305 to which the respective analog lines are connected are monitored, thereby to discriminate analog lines used for transmission of the response commands B1~B3 which are outputted from the DVHS 3a in response to the transmission commands A1~A3, and recognize that the component video terminal 305 is analog-connected to the DVHS 3a.

In this way, analog connection setting of all the external devices connected through the IEEE1394 lines, including the daisy-chained DVHS 3a, is automatically carried out. After the analog connection setting has ended, the switching means 400 performs switching between the IEEE1394 lines and the analog lines which are used by the respective DVHS 1a~3a, according to the operations of the respective DVHS 1a~3a.

In the television receiver according to the first embodiment, when the DVHS 1a~3a are respectively connected through the IEEE1394 lines and the analog lines, the DC levels of the component video terminals to which the respective analog lines are connected are monitored to discriminate analog lines used for transmission of the response commands which are outputted from the respective DVHS 1a~3a in response to the transmission commands, and then switching is performed between the IEEE1394 lines and the analog lines used by the respective DVHS 1a~3a, according to the operations of the respective DVHS 1a~3a. Therefore, a sync signal detection circuit which has conventionally been required is dispensed with, whereby the circuit structure is simplified. Further, analog connection setting of all the external devices connected through the IEEE1394 lines, including the daisy-chained external devices, can be automatically carried out in a short time, whereby user operability is significantly enhanced.

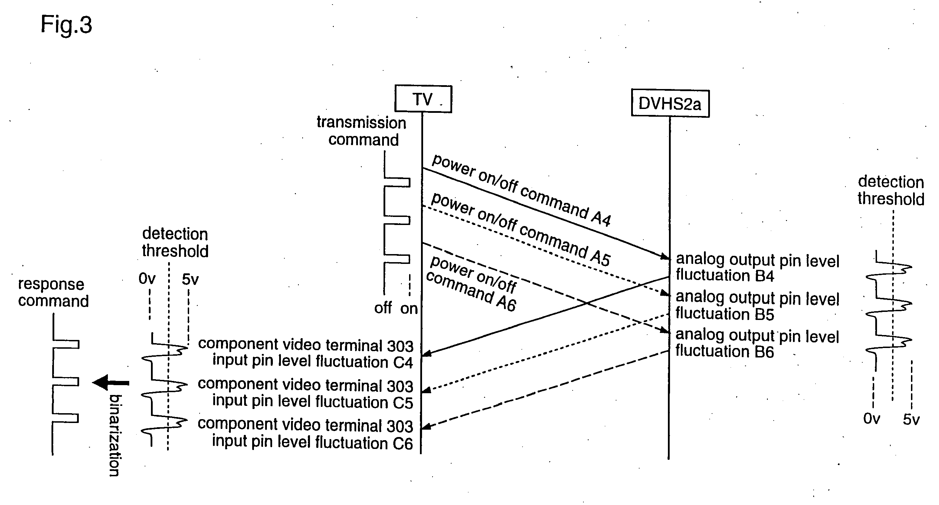

While in this first embodiment analog connection setting is carried out by successively transmitting the same transmission command from the TV side to the respective external devices, transmission commands of different characteristics may be transmitted to the respective external devices. To be specific, the power on/off commands A1~A3 shown in figure 2 are transmitted as transmission commands to the DVHS 1a, and the power on/off commands A4~A6 having different power-on-times are transmitted as transmission commands to the DVHS 2a as shown in figure 3, whereby discrimination for each external device is realized by comparing, on the TV side, the on-times of the response commands outputted from the respective external devices with the on-times of the respective transmission commands, whereby analog connection settings for all the external devices including the daisy-chained external devices can be carried out at one time. Further, as transmission commands of different characteristics, those having different numbers of power on/off controls may be employed.

Further, while in this first embodiment the analog lines are connected to the analog video signal input terminals, analog connection setting can be similarly carried out also in the case where the analog lines are connected to analog audio signal input terminals.

### (Embodiment 2)

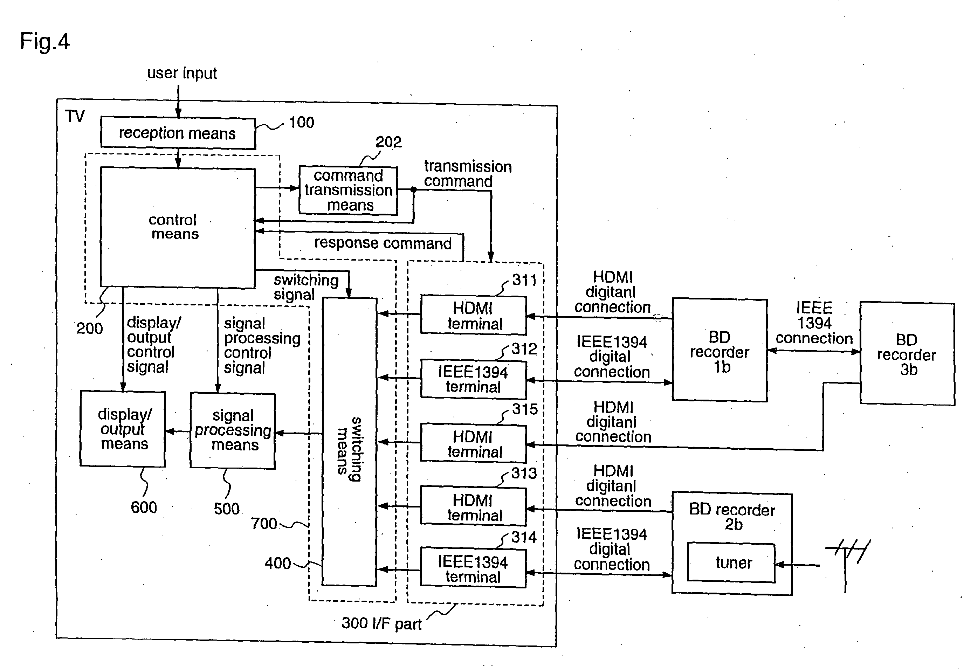

Figure 4 is a diagram illustrating the construction of a television receiver according to a second embodiment of the present invention. In figure 4, the same reference numerals as those shown in figure 1 denote the same elements.

This second embodiment is different from the first embodiment in that the television receiver of the second embodiment includes plural IEEE 1394 terminals and plural HDMI terminals while the television receiver of the first embodiment includes plural IEEE1394 terminals and plural analog input terminals.

The I/F part 300 includes HDMI terminals 311, 313, and 315 as digital input terminals, and IEEE1394 terminals 312 and 314 as digital terminals.

In this second embodiment, it is assumed that blue-ray disc recorders (BD recorders) 1b, 2b, and 3b are connected as external devices. The BD recorder 3b is daisy-chained with the BD recorder 1b by an IEEE1394 line, whereby the BD recorder 3b can exchange data with both of the BD recorder 1b and the TV. Accordingly, the TV can communicate with both of the BD recorder 1b and the BD recorder 3b through the IEEE1394 lines. Further, the BD recorder 2b houses a tuner, which enables the recorder 2b to receive broadcast waves.

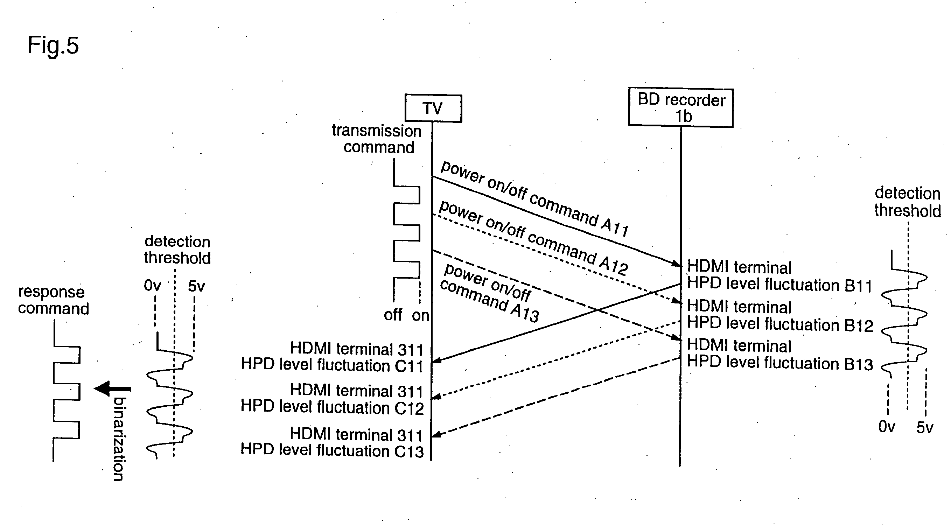

Next, digital connection setting according to the second embodiment will be described with reference to figure 5.

On the TV side, initially, the command transmission means 202 of the control means 200 transmits power on/off commands A11 ~A13 as transmission commands to the BD recorder 1b through the IEEE1394 terminal 312.

On the BD recorder 1b side, DC level fluctuations B11~B13 occur in Hot-Plug-Detect (HPD) lines of the HDMI terminals which are power-on/off-controlled by the power on/off commands A11~A13, and the DC level fluctuations B11~B13 are transmitted as response commands to the TV side through the HDMI line.

On the TV side, DC level fluctuations C11~C13 occur at the HDMI terminal 311 due to reception of the response commands from the BD recorder 1b. The DC level fluctuations C11~C13 are detected and binarized by the discrimination means 203, and the numbers of on/off controls as well as the on-times of the DC. level fluctuations are compared with the transmission commands. As the result of comparison, when it is determined that the transmission commands A11~A13 coincide with the signals obtained by binarizing the DC level fluctuations C11~C13, it is recognized that the HDMI terminal 311 used for transmission of the response commands B11~B13 is digital-connected to the BD recorder 1b.

Next, the transmission commands A11~A13 which are identical to those transmitted to the BD recorder 1b are transmitted from the TV side through the IEEE1394 terminal 314 to the BD recorder 2b, and the DC levels at the HDMI terminals 311, 313, and 315 to which the HDMI lines are connected are monitored to discriminate the HDMI lines used for transmission of the response commands B1 ~B3 outputted from the BD recorder 2b in response to the transmission commands A11~A13, thereby recognizing that the HDMI terminal 313 is digital-connected to the BD recorder 2b.

Likewise, the transmission commands A11~A13 which are identical to those transmitted to the BD recorder 1b are transmitted from the TV side through the IEEE1394 terminal 312 to the BD recorder 3b, and the DC levels at the HDMI terminals 311, 313, and 315 to which the HDMI lines are connected are monitored to discriminate the HDMI lines used for transmission of the response commands B11~B13 outputted from the BD recorder 3b in response to the transmission commands A11~A13, thereby recognizing that the HDMI terminal 315 is digital-connected to the BD recorder 3b.

In this way, analog connection setting for all the external devices connected through the IEEE1394 lines, including the daisy-chained BD recorder 3b, is automatically carried out. After the analog connection setting has ended, the switching means 400 performs switching between the IEEE1394 lines and the HDMI lines which are used by the respective BD recorders 1b~3b, according to the operations of the respective BD recorders 1b~3b. That is, the HDMI lines are used for normal data transmission on the TV side, and the IEEE1394 lines are used for transmission of undecodable streams or the like.on the BD recorder side.

The playback system for automatically performing switching between the IEEE1394 line and the HDMI line according to the operation of the external device can also be applied to the following case.

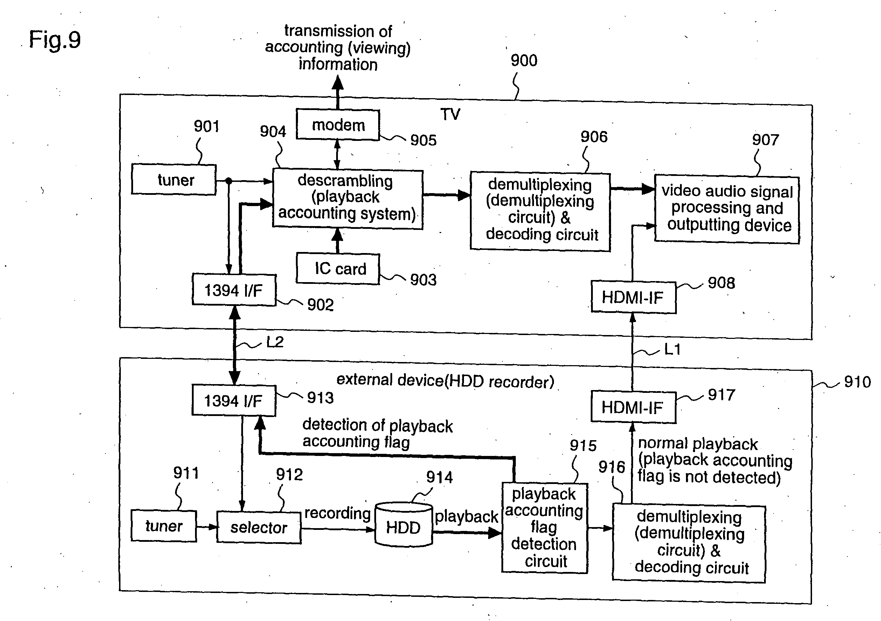

For example, figure 9 shows the case where a pay program for which a playback accounting system is adopted is viewed. In figure 9, an HDD recorder is employed as an external device.

Among program data received by the tuner 901 of the TV 900 or the tuner 911 of the HDD recorder 910, the user records desired program data as a compressed stream in an HDD (Hard Disk Drive) 914. Thereafter, among the data recorded in the HDD 914, data desired by the user is read into a playback accounting flag detection circuit 915 according to an instruction from the user. At this time, it is judged whether the playback data to be played is the data of the pay program or not, in the playback accounting flag detection circuit 915.

As the result of judgement, when no playback accounting flag is detected in the playback data to be played (normal playback), the playback data is demultiplexed and decoded by a demultiplexing and decoding circuit 916, and then transmitted through the HDMI line L1 to the TV 900 side, wherein the playback data is subjected to a predetermined processing by a video audio signal processing and outputting device 907 to be displayed or outputted. Thereby, the user can view the desired playback data.

On the other hand, when a playback accounting flag is detected in playback data to be played (playback of playback accounting corresponding data), the playback data is transmitted through the IEEE1394 line L2 to a descrambling circuit 904 on the TV 900 side, and subjected to descrambling using a playback accounting system corresponding IC card 903. Thereafter, the playback data is subjected to demultiplexing and decoding by a demultiplexing and decoding circuit 906, and then subjected to a predetermined processing by the video audio signal processing and outputting device 907 to be displayed or outputted. Thereby, the user can view the desired playback data.

As described above, switching between the HDMI line L1 and the IEEE1394 line L3 is automatically performed such that, when playing normal data which is not playback accounting corresponding data among the data recorded in the HDD 914 of the HDD recorder 910, this data is transmitted to the TV 900 side using the HDMI line L1; on the other hand, when playing playback accounting corresponding data, this data is transmitted to the TV 900 side using the IEEE1394 line L2. Therefore, it is possible to continuously play the normal data and the playback accounting corresponding data which are recorded on the HDD 914.

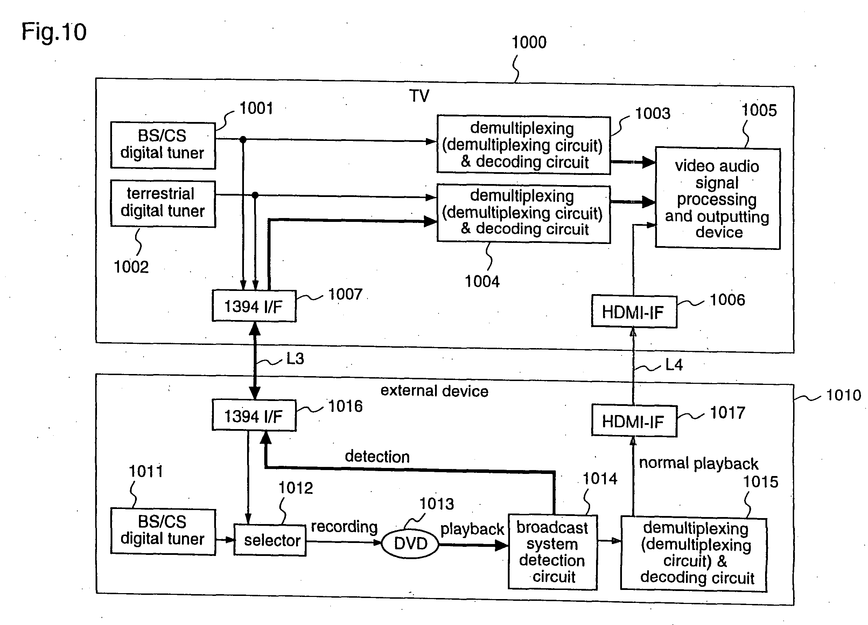

Besides the example shown in figure 9, there is a case where only the TV side is equipped with a terrestrial digital tuner 1002 as shown in figure 10. In figure 10, a BD recorder is used as an external device.

When the user receives a desired program by a BS/CS digital tuner 1001 or a terrestrial digital tuner 1002 which are provided on a TV 1000, data of the,program is subjected to demultiplexing and decoding by an exclusive demultiplexing and decoding circuit 1003 or 1004, respectively, and then subjected to a predetermined processing by a video audio signal processing and outputting device 1005 to be displayed or outputted, whereby the user can view the desired program.

On the other hand, in a case where program data received by the BS/CS digital tuner 1001 or the terrestrial digital tuner 1002 on the TV 1000 or by a BS/CS digital tuner 1011 on an external device 1010 is stored in a DVD 1013 and the user plays desired data among the data recorded on the DVD 1013, the broadcast system of the playback data that is read from the DVD 1013 is determined by a broadcast system detection circuit 1014.

As the result of determination, when the playback data to be played is program data received by the BS/CS tuner 1001, this data is subjected to demultiplexing and decoding by a demultiplexing and decoding circuit 1015, and thereafter, transmitted to the TV 1000 side through the HDMI line L4, and subjected to a predetermined processing by a video audio signal processing and outputting device 1005 to be display or outputted. Thereby, the user can view the desired playback data.

On the other hand, when the playback data to be played is program data received by the terrestrial digital tuner 1002, since the externaldevice 1010 has no demultiplexing and decoding circuit corresponding to terrestrial digital broadcasting, the data is transmitted to the TV 1000 through the IEEE1394 line L3, and subjected to demultiplexing and decoding by the exclusive demultiplexing and decoding circuit 1004, and then subjected to a predetermined processing by the video audio signal processing and outputting device 1005 to be displayed or outputted. Thereby, the user can view the desired playback data.

As described above, on the external device 1010 side, switching between the IEEE1394 line L3 and the HDMI line L4 is automatically performed to transmit the playback data read from the DVD 1013 to the TV 1000 side according to the broadcast system of the playback data, and therefore, it is possible to continuously play the data received by the terrestrial digital tuner and the data received by the BS/CS tuner which are recorded on the DVD 1013.

In this second embodiment, when the terrestrial digital tuner 1002 is mounted on only the TV 1000 side and program data received by the terrestrial digital tuner 1002 is recorded and played by the external device 1010, the data is transmitted from the external device 1010 through the IEEE1394 line L3 to the TV 1000 and decoded on the TV 1000 side. However, the present invention is not restricted thereto. For example, when playing data which cannot be decoded on the external device 1010 side, the data may be transmitted unconditionally through the IEEE1394 line. Alternatively, when identical tuners are mounted on both of the TV 1000 and the external device 1010, it is predetermined as to whether decoding should be performed on the TV 1000 or on the external device 1010, and then switching is performed between the IEEE1394 line and the HDMI line.

In the case where the television receiver according to the second embodiment is connected to an external device through IEEE1394 lines and HDMI lines, transmission commands are transmitted to the external device through the IEEE 1394 lines, and the DC levels of all the HDMI terminals 311, 313, and 315 are monitored to discriminate the HDMI terminal that is used for transmission of response commands which are outputted from the external device in response to the transmission commands. Therefore, digital connection setting can be automatically carried out in a short time even when the external device is daisy-chained, whereby user operability is enhanced.

Further, in the television receiver according to the second embodiment, the IEEE1394 line connected to the external device and the HDMI line corresponding to the IEEE1394 line can be reliably recognized. Therefore, even when switching is required between the HDMI line and the IEEE1394 line, for example, when the playback accounting system is adopted or when a stream data comprising both of data that is undecodable on the external device side and data that is decodable on the external device side is played, switching between these lines can be automatically and reliably carried out, whereby the user can view the data with no necessity of performing troublesome input operation.

Furthermore, also when the television receiver according to the second embodiment is connected to plural external devices through IEEE1394 lines and HDMI lines, digital setting is similarly carried out, and switching between the IEEE1394 lines and the HDMI lines which are used by the respective external devices can be automatically carried out according to the operations of the respective external devices. Therefore, it is possible to provide a stable playback system which can enhance user operability.

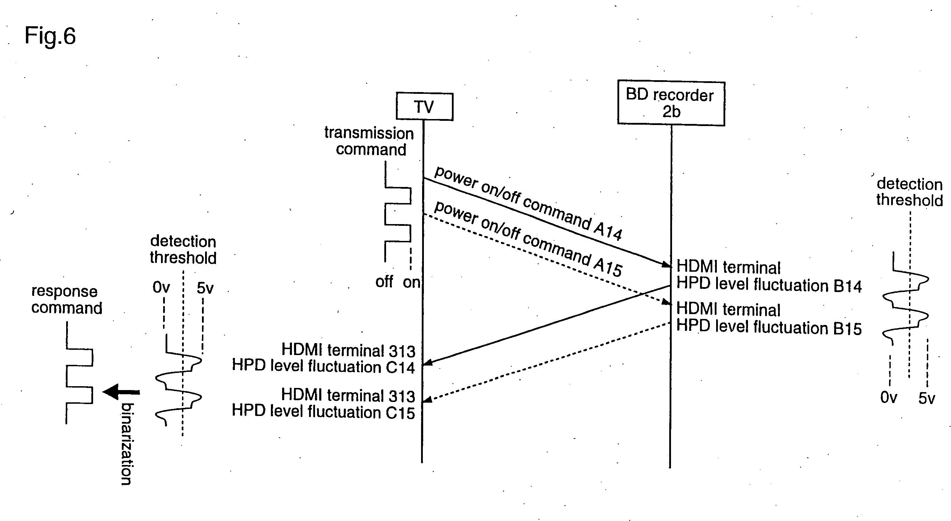

While in this second embodiment identical transmission commands are successively transmitted from the TV side to the plural external devices to perform digital setting, transmission commands of different characteristics may be transmitted to the respective external devices. To be specific, commands A11~A13 instructing three times of power on/off are transmitted as transmission commands to the BD recorder 1b as shown in figure 5, while commands A14 and A15 instructing two times of power on/off are transmitted to the BD recorder 2b as shown in figure 6, whereby discrimination for each external device is realized by comparing, on the TV side, the numbers of on/off controls of the response commands that are outputted from the external devices, and therefore, digital connection settings for all the external devices including the daisy-chained external device can be carried out at one time. Further, commands having different power-on times may be used as transmission commands of different characteristics.

Further, while in this second embodiment the DC levels of the Hot-Plug-Detect lines of the HDMI terminals are detected, the same effects as mentioned above are also achieved when detecting any of DC level fluctuations of TMDS signals, presence/absence of clocks of TMDS clock channels, DC level fluctuations of device control lines, and DC level fluctuations of DDC (I2C) lines.

Further, in this second embodiment, discrimination of a digital input terminal used for transmission of a response command is carried out using power on/off commands as a transmission command and a response command. However, a specific packet may be transmitted as a transmission command, and a specific acknowledge signal (Ack signal) may be returned from the external device to perform discrimination of a digital input terminal used for transmission of the response command. A TMDS signal, a device control signal, a DDC (I2C) signal, or the like may be employed as a specific packet, while a specific video signal of the TMDS signal, a specific pattern of the device control signal, a specific pattern of the DDC (I2C) signal, or the like may be employed as an Ack signal to be returned.

### APPLICABILITY IN INDUSTRY

A television receiver according to the present invention is useful as a television receiver which can discriminate plural external devices by detecting DC levels or the like at input terminals, and can automatically perform switching between an IEEE1394 line and an analog line or a digital line according to the operations of the respective external devices.

## Claims

1. A television receiver to which plural external devices are respectively connected through IEEE1394 lines and analog lines, comprising:
a command transmission means for successively transmitting the same transmission command to the plural external devices through the IEEE1394 lines connected to the respective external devices; and
a switching control means for monitoring DC levels at analog video signal input terminals or analog audio signal input-terminals which are connected to the respective analog lines to discriminate analog lines which are used for transmission of response commands that are outputted from the respective external devices in response to the respective transmission commands, and automatically selecting either the IEEE1394 lines or the analog lines which are used by the respective external devices, according to the operations of the respective external devices.

2. A television receiver to which plural external devices are respectively connected through IEEE1394 lines and analog lines, comprising:
a command transmission means for transmitting plural transmission commands having different characteristics for the respective external devices, to the respective external devices through the IEEE1394 lines connected to the external devices; and
a switching control means for discriminating an analog line which is used for transmission of response commands that are outputted from the respective external devices in response to the respective transmission commands, and automatically selecting either the IEEE1394 lines or the analog lines which are used by the respective external devices, according to the operations of the respective external devices.

3. A television receiver as defined in Claim 1 wherein
said transmission command is power-on or power-off to the external devices, or repetition thereof.

4. A television receiver as defined in Claim 2 wherein
said transmission command is power-on or power-off to the external devices, or repetition thereof; and
said command transmission means transmits transmission commands having different on-times for the respective external devices or different numbers of on/off controls for the respective external devices.

5. A television receiver as defined in Claim 2 wherein
said terminals to which the respective analog lines are connected are analog video signal input terminals or analog audio signal input terminals.

6. A television receiver as defined in Claim 5 wherein
said switching control means monitors the DC levels at the analog video signal input terminals or the analog audio signal input terminals to discriminate the analog lines.

7. A television receiver to which external devices are respectively connected through IEEE1394 lines and digital lines, comprising:
a command transmission means for transmitting transmission commands to the external devices through the IEEE1394 lines; and
a switching control means for discriminating a digital line which is used for transmission of response commands that are outputted from the external devices in response to the transmission commands, and selecting either the IEEE1394 lines or the digital lines which are used by the external devices, according to the operations of the external devices.

8. A television receiver to which plural external devices are respectively connected through IEEE1394 lines and digital lines, comprising:
a command transmission means for successively transmitting the same transmission command to the plural external devices through the IEEE1394 lines connected to the respective external devices; and
a switching control means for discriminating a digital line which is used for transmission of response commands that are outputted from the respective external devices in response to the respective transmission commands, and selecting either the IEEE1394 lines or the digital lines which are used by the respective external devices, according to the operations of the respective external devices.

9. A television receiver to which plural external devices are respectively connected through IEEE1394 lines and digital lines, comprising:
a command transmission means for transmitting plural transmission commands having different characteristics for the respective external devices, to the respective external devices through the IEEE1394 lines connected to the external devices; and
a switching control means for discriminating a digital line which is used for transmission of response commands that are outputted from the respective external devices in response to the respective transmission commands, and selecting either the IEEE1394 lines or the digital lines which are used by the respective external devices, according to the operations of the respective external devices.

10. A television receiver as defined in Claim 8 wherein
said transmission command is power-on or power-off to the external devices, or repetition thereof.

11. A television receiver as defined in Claim 9 wherein
said transmission command is power-on or power-off to the external devices, or repetition thereof; and
said command transmission means transmits transmission commands having different on-times for the respective external devices or different numbers of on/off controls for the respective external devices.

12. A television receiver as defined in Claim 8 or Claim 9 wherein
the terminals to which the respective digital lines are connected are HDMI terminals.

13. A television receiver as defined in Claim 12 wherein
said switching control means monitors the DC levels of the HDMI terminals to discriminate the digital lines.

14. A television receiver as defined in Claim 12 wherein
said command transmission means transmits the transmission commands through the IEEE1394 lines to the external devices; and
said switching control means monitors signal levels of device control signals which are outputted from the external devices in response to the transmission commands or response commands of the device control signals, to discriminate the digital lines.

15. An external device connected to a television receiver through IEEE1394 lines and analog lines, including:
a detection means for detecting transmission commands which are transmitted from the television receiver through the IEEE1394 lines, and outputting response commands corresponding to the transmission commands to the television receiver through the analog lines.

16. An external device connected to a television receiver through IEEE1394 lines and digital lines, including:
a detection means for detecting transmission commands which are transmitted from the television receiver through the IEEE1394 lines, and outputting response commands corresponding to the transmission commands to the television receiver through the digital lines.
